Europäisches Patentamt

European Patent Office

Office européen des brevets

(11) Veröffentlichungsnummer: **0 184 678**
**B1**

(12) **EUROPÄISCHE PATENTSCHRIFT**

(45) Veröffentlichungstag der Patentschrifft:
**17.01.90**

(21) Anmeldenummer: **85114360.2**

(22) Anmeldetag: **12.11.85**

(51) Int. Cl. ⁴: **F 16 L 11/14, F 16 L 11/18, B 23 Q 5/50, H 02 G 11/00**

(54) Flexibler Schlauch mit rechteckigem Querschnitt, insbesondere Energieleitungsträger.

(30) Priorität: **13.12.84 DE 3445493**

(43) Veröffentlichungstag der Anmeldung:
**18.06.86 Patentblatt 86/25**

(45) Bekanntmachung des Hinweises auf die Patenterteilung:
**17.01.90 Patentblatt 90/03**

㊦ Bennante Vertragsstaaten:
**AT CH DE FR GB LI**

(56) Entgegenhaltungen:
**CH-A-639 739**
**DE-A-2 341 849**
**DE-A-2 622 005**
**DE-A-2 801 330**
**DE-A-2 919 379**
**DE-B-2 853 715**

(73) Patentinhaber: **Witzenmann GmbH Metallschlauch-Fabrik Pforzheim**
**Östliche Karl-Friedrich-Strasse 134**
**D-7530 Pforzheim (DE)**

(72) Erfinder: **Förster, Walter**
**Heynlinstrasse 23**
**D-7535 Stein (DE)**

(74) Vertreter: **Lemcke, Rupert, Dipl.-Ing.**
**Patentanwälte Dipl.-Ing. R. Lemcke Dr.-Ing. H.J. Brommer Bismarckstrasse 16 Postfach 4026**
**D-7500 Karlsruhe 1 (DE)**

EP 0 184 678 B1

LIBERGRAF, STOCKHOLM 1990

## Beschreibung

Die Erfindung betrifft einen flexiblen Schlauch mit rechteckigem Querschnitt, insbesondere Energieleitungsträger für die Anordnung zwischen einem beweglichen Verbraucher und einem ortsfesten Anschluß, bestehend aus geteilten, ringförmigen Gliedern mit im radialen Querschnitt S-förmiger oder U-förmiger Profilierung, wobei sich benachbarte Glieder mit ihren randständigen, radialen Stegen hintergreifen, an jeder Teilungsstelle durch Verschlußmittel zusammengefügt sind und der Schlauch aus der geraden Lage nur in eine zu einer der Rechteckseiten des Schlauchquerschnittes senkrechten Richtung abbiegbar ist.

Die genannten Schläuche dienen als Energieleitungsträger beispielsweise bei Werkzeugmaschinen der Führung von Kabeln, Schläuchen oder dergleichen zwischen dem Maschinengestell und einem Support, allgemein also der Führung von Versorgungsanschlüssen zu einem beweglichen Verbraucher, wobei diese Führung über einen sich abrollenden Bogen stattfindet. Bei den bekannten Energieleitungsträgern sind die einzelnen Schlauchglieder fortlaufend ineinander gehakt und auf diese Weise miteinander verbunden, womit sich ein beliebig langer Gliederschlauch herstellen läßt.

Dabei weisen jedoch die Schlauchglieder verhältnismäßig komplizierte, insbesondere über den Umfang unsymmetrische und mehrteilige Formen auf, so daß sie aus Blech mit besonderen Stanzwerkzeugen oder beispielsweise aus Kunststoff mit besonderen Spritzformen hergestellt werden müssen, wodurch sich ein sehr hoher Werkzeugaufwand ergibt. Dies insbesondere im Hinblick darauf, daß die Schläuche für die verschiedenen Anwendungsfälle in unterschiedlichen Querschnittsgrößen bereit gehalten werden müssen und daß im übrigen unterschiedliche Anforderungen an den möglichen Biegeradius des genannten Bogens gestellt werden. Daher ist auch das Angebot der bekannten Schläuche auf die gängigen Abmessungen eingeschränkt, so daß sich seltener vorkommende Anforderungen nur angenähert und somit unter Inkaufnahme von Nachteilen erfüllen lassen. Siehe hierzu die CH-A-639 739.

Gebräuchlich sind ferner auf der Grundlagen einer anderen Gattung aus einem Metallband gewickelte Rechteckschläuche beispielsweise als Energieleitungsträger, bei denen es unter anderem bekannt ist, die Biegbarkeit nur in eine Richtung dadurch zu erzwingen, daß auf der Krümmungsaußenseite in die Profilierung Distanzstücke eingesetzt sind und dadurch hier die Verschiebbarkeit der Profilierung blockiert ist. Derartige Rechteckschläuche sind in der DE-A-2 341 849 beschrieben.

Diese gewickelten Schläuche haben jedoch den Nachteil, daß sie in ihrer gestreckten Lage um die Längsachse verdreht sind und einen Drall aufweisen, wodurch nicht nur der äußere Eindruck des Schlauches beeinträchtigt ist, sondern sich auch ein Verlaufen (mangelnde Spurhaltung) des Schlauches ergibt, die die verwendbare Schlauchlänge begrenzt. Durch die genannten Erscheinungen ergibt sich außerdem eine ungleiche Belastung des Schlauches bei Biegung, womit ein ungleichmäßiger Verschleiß einhergeht.

Beim Wickeln dieses Schlauches können nur schmale Bänder verarbeitet werden und es sind nur kleinen Profilhöhen möglich, so daß sich ein wenig quersteifer Schlauch und ein verhältnismäßig hoher Material aufwand in Bezug auf die Anzahl der radialen Profilstege pro Schlauchlänge ergibt. Auch können Reststücke nicht einem weiteren Gebrauch zugeführt werden, da deren Zusammensetzen wirtschaftlich nicht möglich ist. Gleichermaßen ist eine Reparatur durch Einsetzen von Teilstücken nicht möglich. Schließlich ergeben sich hinsichtlich der Werkzeugkosten die bereits beschriebenen Nachteile im Hinblick auf unterschiedliche Schlauchnennweiten und zulässige Biegeradien, wobei letztere nur durch verschiedene Profilgestaltung der Metallbänder beeinflußt werden können.

Durch die DE-A-2 801 330 ist außerdem ein Energieleitungsträger in Form der vorstehend angesprochenen gewickelten Rechteckschläuche bekannt, der die Biegbarkeit in nur eine Richtung ohne die Verwendung zusätzlicher Teile festlegt. Unabhängig davon, daß diesem Rechteckschlauch die vorgenannten Nachteile eines gewickelten Schlauches ebenfalls anhaften, ist hier jedoch die Verzichtbarkeit zusätzlicher Teile dadurch erkauft, daß das den Schlauch bildende Band beim Wickeln des Schlauches alternierend unterschiedlich zu profilieren ist, so daß es im Ergebnis auf der einen Schlauchseite eine Profilform und auf der anderen Schlauchseite eine andere, die gegenseitige Bewegung benachbarter Schlauchwindungen blockierende Profilierung aufweist. Dadurch bedingt die Herstellung eines solchen Schlauches hohe Werkzeugkosten, ein kompliziertes und ungleichmäßiges äußeres Erscheinungsbild sowie eine langsame und störungsanfällige Fertigung.

Die zuletzt genannte Druckschrift enthält außerdem auch eine Bauform der eingangs genannten Gattung. Hierbei kommt es jedoch wieder zu dem dort diskutierten komplizierten, insbesondere über den Umfang unsymmetrischen Formen der Schlauchglieder.

Aufgabe der Erfindung ist es, die Mängel eines Schlauches, insbesondere Energieleitungsträger der eingangs genannten Art zu beseitigen und einen Schlauch konstruktiv so zu gestalten, daß er sich in einfacher Weise aus einem Profilband mit ebenso einfachen und billigen Werkzeugen für unterschiedliche Nennweiten herstellen und reparieren läßt, wobei gleichzeitig eine Möglichkeit angegeben werden soll, wie sich ohne nennenswerten zusätzlichen Aufwand auch unterschiedliche zulässige Biegeradien verwirklichen und ebenso schwierige Materialien verarbeiten lassen.

Diese Aufgabe ist erfindungsgemäß dadurch gelöst, daß die aus einem Profilband hergestellten Glieder eine Teilungsstelle auf der Krümmungsaußen- oder -innenseite des Schlauches aufweisen, daß die die Teilungsstelle enthaltenden Abschnitte der Glieder durch ein Verschlußglied miteinander verbunden sind und daß wenigstens jedes zweite Verschlußglied bei gestrecktem oder gestauchtem Schlauchzustand eine die gegenseitige Bewegung zwischen seinem zugeordneten Gliedabschnitt und den entsprechenden Abschnitten der diesem in Längsrichtung des Schlauches benachbarten Glieder durch axiale Bewegungsblockierung deren radialer Stege sperrende Breite aufweist. Dabei können die Verschlußglieder aus Metall oder Kunststoff bestehen.

Dadurch, daß nach der Erfindung die Teilungsstelle jedes Schlauchgliedes auf die Krümmungsaußen- bzw. -innenseite gelegt ist, ist die Möglichkeit gegeben, dort ein Verschlußglied von außen anzubringen bzw. in die von zwei benachbarten Gliedern gebildete Kammer einzusetzen, das gleichzeitig die Aufgabe der Überbrückung der Teilungsstelle und die Aufgabe der Sperrung der Verschiebbarkeit der Schlauchprofile auf der Krümmungsaußen- bzw. -innenseite erfüllt. Dadurch ist sehr geringer Materialaufwand möglich und einfachste Handhabung gesichert und es ist ein einfacher und von den Grundmaterialien her unkomplizierter Schlauchaufbau gegeben.

Durch die erfindungsgemäße Ausbildung der Glieder können diese aus einem entsprechenden Profil durch Ablängen einzelner Stücke und deren viermaliges Biegen hergestellt werden, wobei eine präzise innere und äußere Führung bzw. Abstützung des Profilstreifens im Biegewerkzeug über den gesamten Schlauchumfang erreicht wird, so daß nunmehr auch schwierige Materialien wie z. B. Edelstahl verarbeitet werden können. Zudem besteht die Möglichkeit, Teile des Biegewerkzeuges verstellbar auszubilden, so daß ohne zusätzliche Werkzeuge die Herstellung unterschiedlicher Schlauchnennweiten möglich ist.

Auch können nun verhältnismäßig breite Profilbänder verarbeitet werden, so daß eine höhere Fertigungsgeschwindigkeit und ein kleinerer Biegeradius bei höherem Verschiebeweg erzielt werden können und bei Bauformen, die von der gestreckten Schlauchlage ausgehen, der Materialeinsatz pro Längeneinheit des Schlauches herabgesetzt ist, da die Zahl der radialen Stege so klein wie möglich gehalten werden kann. Auf der anderen Seite kann ohne Beeinträchtigung einer qualitativ guten Fertigung die Steghöhe vergrößert werden und damit die Quersteifigkeit des Schlauches. Durch die freie Gestaltung der Profilform ist es also möglich, eine auf die entsprechende Anforderung des jeweiligen Bedarfsfalles abgestimmte Schlauchkonstruktion einfach und kostengünstig zu gestalten.

Die Verbindung zwischen den die Teilungsstellen enthaltenden Abschnitten der Schlauchglieder und den Verschlußgliedern kann formschlüssig bzw. stoffschlüssig durch Schweißen, Löten, Kleben, Ausspritzen bzw. Ausschäumen, Schrauben, Nieten, Prägen, gegenseitigen Eingriff od. dgl. erfolgen, also durch endgültige oder auch lösbare Verbindung, wobei die lösbare Verbindung das Auswechseln schadhafter Stücke eines Schlauches erleichtert.

Im einfachsten Falle können die Verschlußglieder Laschen sein, die in das Schlauchprofil eingesetzt die Verbindungsaufgabe erfüllen und die Bewegung benachbarter Glieder sperren. Es besteht jedoch auch die Möglichkeit, Verschlußglieder mit im Radialschnitt U-förmiger Profilierung zu verwenden, um die Querdruckfestigkeit des Schlauches zu erhöhen. Auch können massive Verschlußkörper verwendet werden, die die Profilierung nicht nur in Axial-, sondern auch in Radialrichtung ausfüllen. Eine zwei einzelne Verschlußglieder zusammenfassende Bauform kann ausgehend vom gestreckten Schlauchzustand beispielsweise auch darin bestehen, daß die Verschlußglieder beginnend bei einer in den nach außerhalb des Schlauches offenen Profilteilen angeordneten, im Radialschnitt U-förmigen Profilierung die nach innerhalb des Schlauches offenen Profilteile radial außen durch einen mit der U-förmigen Profilierung verbundenen Fortsatz axial übergreifen.

In allen Fällen kann es zweckmäßig sein, daß sich die Verschlußglieder über im wesentlichen die gesamte die Teilungsstelle aufweisende Rechteckseite des Schlauches erstrecken. Hiermit ist eine exakte und gegen Belastung sehr stabile Führung und Halterung benachbarter Schlauchglieder gegeben.

Ein besonder Vorzug nach der Erfindung liegt darin, daß einenzelnen Verschlußgliedern radial gegenüberliegend zusätzliche Sperrglieder am Schlauchglied befestigt sind oder daß einzelne der Verschlußglieder als um den gesamten Schlauch umlaufend ausgebildet sind, die Verschlußglieder bzw. Sperrglieder dann also die gegenseitige Beweglichkeit der Schlauchglieder sowohl auf der Außenseite als auch auf der Innenseite der Krümmung blockieren. Dadurch besteht die Möglichkeit, ausgehend von einem minimalen Krümmungsradius, der durch das Profil der Schlauchglieder gegeben ist, größere Radien als Untergrenze des Biegeradius festzulegen, ohne daß im übrigen auf die Schlauchkonstruktion ein ändernder Einfluß genommen zu werden braucht. Dabei ist praktisch eine stufenlose Variationsbreite gegeben, indem beispielsweise jedes zweite, dritte oder vierte Verschlußglied umlaufend ausgebildet oder ihm gegenüber ein Sperrglied angeordnet ist.

Ferner können bei Schlauchgliedern mit U-förmiger Profilierung die radial innerhalb angeordneten Glieder mit nach außerhalb des Schlauches offener Profilierung als in sich geschlossene Glieder ausgebildet sein. Diese inneren Glieder lassen sich also in noch einfacherer Weise ohne das Erfordernis von Verschlußgliedern fertigen, da es zur Blockierung des Schlauches gegen Krümmung in eine Richtung ausreicht, wenn in jedem zweiten Schlauchglied ein diese Blockierung verursachendes Verschlußglied vorhanden ist.

Schließlich können ausgehend vom gestauchten Schlauchzustand die Verschlußglieder wenigstens mit dem radial außen liegenden Schlauchglied verbunden sein. Hier ist es also nicht erforderlich, daß die Verschlußglieder auch mit dem beim Stauchzustand des Schlauches radial innen liegenden Schlauchglied verbunden werden.

Weitere Merkmale und Einzelheiten der Erfindung ergeben sich aus der nachfolgenden Beschreibung von Ausführungsformen anhand der Zeichnung. In der Zeichnung zeigen:

Fig. 1  einen Gliederschlauch in seitlicher Schnittansicht;

Fig. 2  die Frontansicht des Schlauches gemäß Fig. 1;

Fig. 3  die seitliche Schnittansicht eines Gliederschlauches mit vergrößertem Biegeradius;

Fig. 4  bis 15
Schlauchausschnitte in vergrößerter Darstellung mit konstruktiven Einzelheiten und

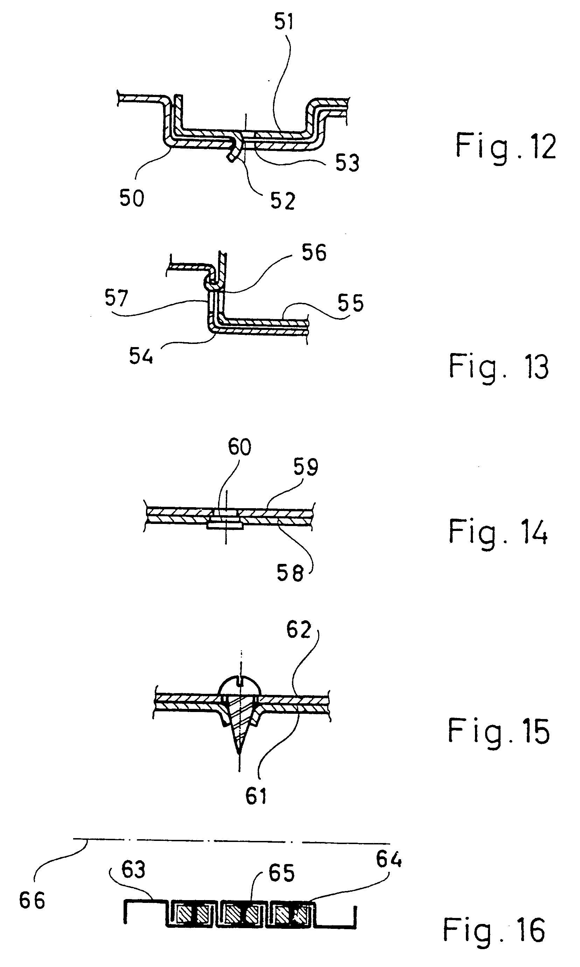

Fig. 16  eine ausschnittweise seitliche Schnittansicht einer weiteren Ausführungsform eines Gliederschlauches.

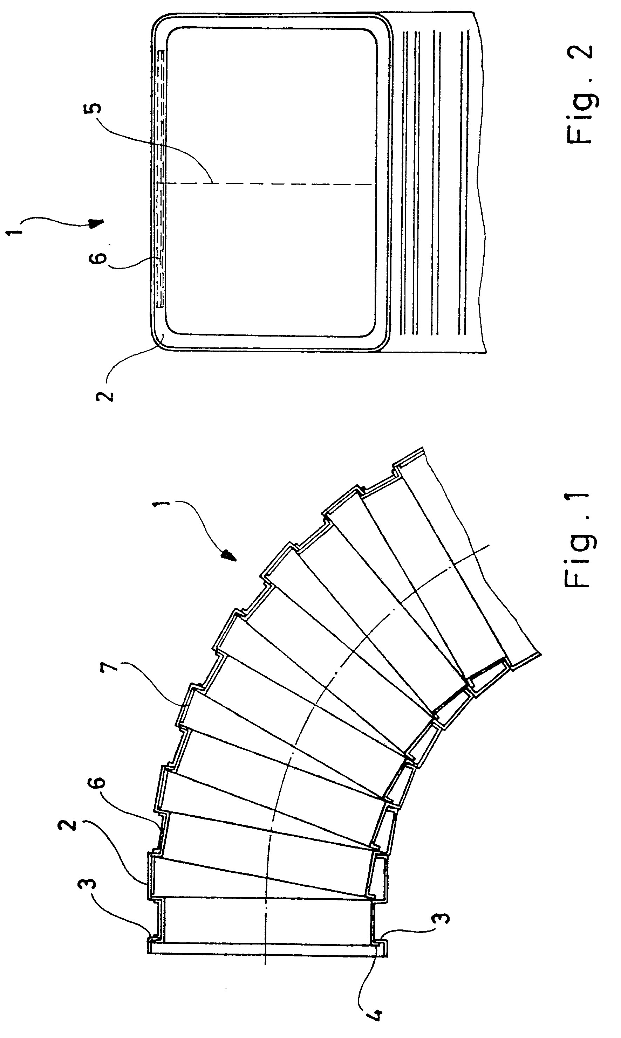

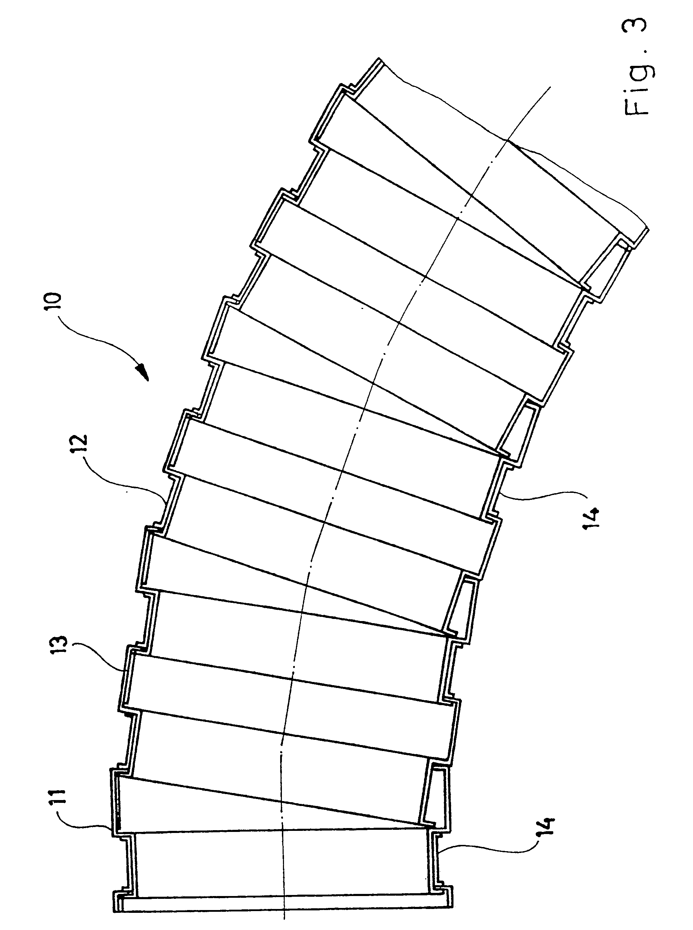

Die Fig. 1 und 2 zeigen einen Gliederschlauch 1 im Axialschnitt und in bezogen auf Fig. 1 Ansicht von links. Dieser Schlauch besteht aus Gliedern 2 mit S-förmiger Profilierung, die randständig ineinandergehängt sind, indem die radial nach innen ragenden Stege 3 des einen Gliedes die radial nach außen ragenden Stege 4 des benachbarten Gliedes übergreifen. Der Schlauch und damit die Glieder haben einen rechteckigen Querschnitt, wie dies aus Fig. 2 ersichtlich ist. Die einzelnen Glieder weisen auf der Mitte der Krümmungsaußenseite eine Teilungsstelle 5 auf. Um die Ringe hier zu schließen, sind Verschlußglieder 6 und 7 auf der Krümmungsaußenseite eingesetzt, die im wesentlichen, wie aus Fig. 2 ersichtlich, in ihrer Länge der Breite des Schlauches 1 entsprechen und in Längsrichtung des Schlauches gesehen dafür sorgen, daß die Stege 3 und 4 aneinandergehalten werden.

Die Verschlußglieder 6 haben einen U-förmigen Querschnitt, wodurch die Querdruckfestigkeit des Schlauches erhöht wird. Demgegenüber sind die Verschlußglieder 7 einfache Laschen. In beiden Fällen sind die Verschlußglieder auf beiden Seiten der Teilungsstelle 5 mit den an diese angrenzenden Profilteilen der Schlauchglieder 2 verbunden, wobei diese Verbindung beispielsweise durch Löten oder Kleben flächenhaft erfolgen kann, jedoch auch durch Punktschweißen oder Formschluß an mehreren Stellen erfolgen kann.

Wie aus Fig. 1 ersichtlich, sind die benachbarten Schlauchglieder auf der Krümmungsaußenseite immer in dem gegenseitigen Abstand, der der Strecklage des Schlauches entspricht. Auf der Krümmungsinnenseite sind die Schlauchglieder gegeneinander verschiebbar, wodurch sich in diese Richtung die Biegbarkeit des Schlauches ergibt.

Fig. 3 zeigt einen Schlauch 10 in seitlicher Schnittansicht, dessen Glieder 11 wiederum aus einem Band mit S-förmiger Profilierung gebogen sind. Der Schlauch 10 entspricht im Querschnitt der in der Fig. 2 dargestellten Art. Auch die Erläuterungen bezüglich der Verschlußglieder 12 und 13 entsprechen den Erläuterungen zu den Fig. 1 und 2. Bei Fig. 3 sind jedoch einzelne Sperrglieder 14, die im übrigen den Verschlußgliedern 12 entsprechen, auch auf der Krümmungsinnenseite des Schlauches 10 angebracht, so daß sie die gegenseitige Bewegung benachbarter Schlauchglieder auch auf der Krümmungsinnenseite sperren.

Dadurch ergibt sich bezogen auf Fig. 1 ein größerer minimaler Biegeradius des Schlauches gemäß Fig. 3, ohne daß im übrigen eine konstruktive Änderung hätte vorgenommen werden müssen. Selbstverständlich können die Glieder 12, 14 auch als ein umlaufender Ring ausgebildet sein, um nur eine Befestigungsstelle erforderlich zu machen, die abseits der Teilungsstelle liegen kann.

Wie anhand der Fig. 1 bis 3 ersichtlich, sind die Schlauchglieder 2 bzw. 11 aus einem Profil durch viermaliges Biegen hergestellt. Dadurch ergibt sich die Nennweite des Schlauches, wobei diese Nennweite ohne besondere Schwierigkeiten durch Verwendung eines verstellbaren Biegewerkzeuges geändert werden kann.

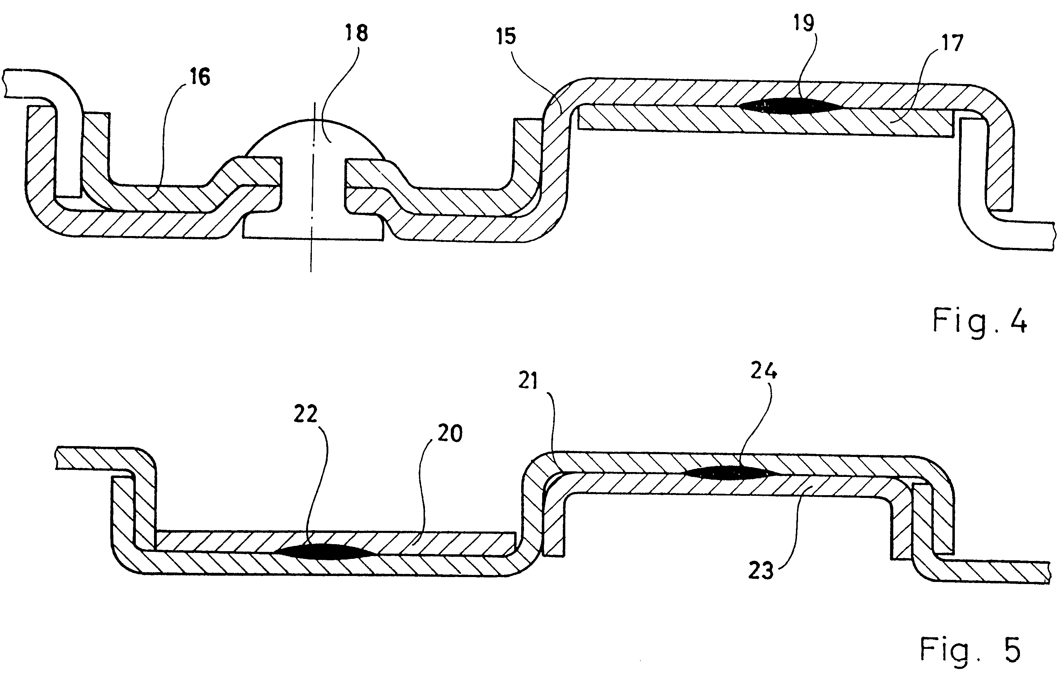

Fig. 4 zeigt in vergrößerter Einzeldarstellung das S-förmige Profil 15 eines Schlauchgliedes mit einem Verschlußglied 16 und einem Verschlußglied 17. Dabei sitzt das Verschlußglied 16, das ein im radialen Querschnitt U-förmiges Profil aufweist, in dem nach außerhalb des Schlauches offenen Profilteil des Gliedes 15, während das Verschlußglied 17 in dem nach innerhalb des Schlauches offenen Profilteil sitzt. Wie ersichtlich, ist das Verschlußglied 16 mit dem Schlauchglied 15 durch mehrere Nieten 18 verbunden, während diese Verbindung für das Verschlußglied 17 durch Punktschweißung 19 gegeben ist.

Fig. 5 zeigt eine mit Fig. 4 vergleichbare Ausführungsform, wobei jedoch hier das Verschlußglied 20 im nach außerhalb des Schlauches offenen Profilteil des Schlauchgliedes 21 als einfache Lasche ausgebildet und durch Schweißen 22 befestigt ist, während das Verschlußglied 23 einen U-förmigen Radialquerschnitt aufweist, andererseits ebenfalls durch Schweißungen 24 festgelegt ist.

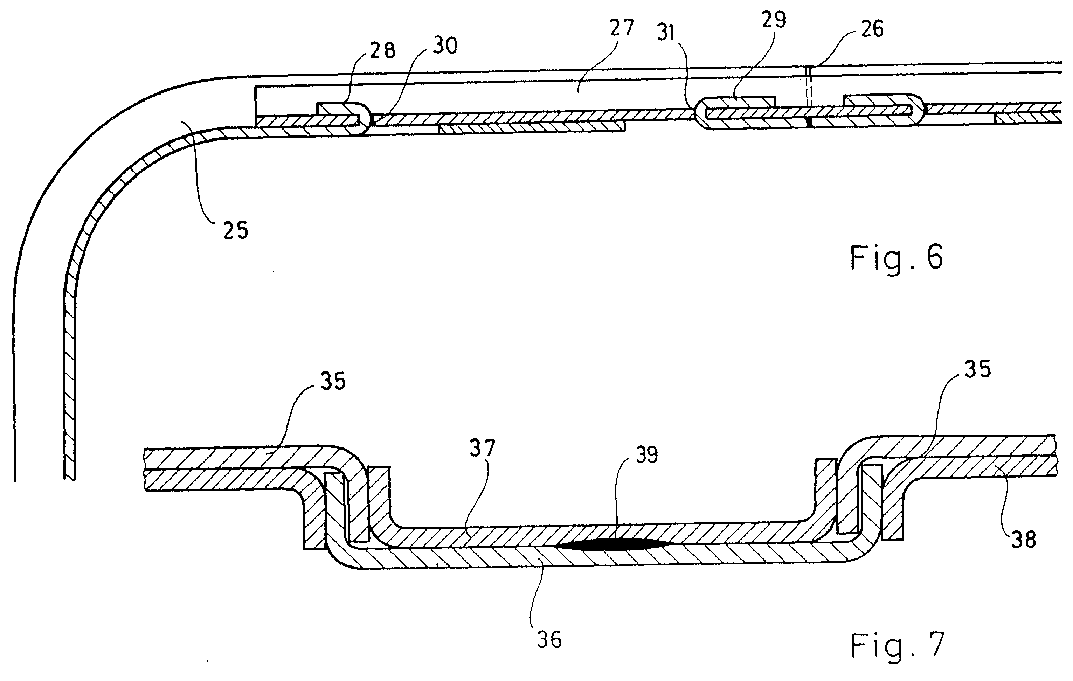

Fig. 6 zeigt eine teilweise Schnittansicht durch ein Schlauchglied 25 in der Darstellung entsprechend Fig. 2. Hier ist die Teilungsstelle 26 durch ein Verschlußglied 27 mit U-förmigem Radialquerschnitt überbrückt. Zur formschlüssigen Verbindung zwischen Schlauchglied 25 und Verschlußglied 27 sind aus dem Schlauchglied 25 neben der Teilungsstelle 26 Laschen 28, 29 ausgestanzt, nach oben gebogen, durch Öffnungen 30, 31 des Verschlußgliedes 27 gesteckt und dann auf dieses Verschlußglied umgebogen.

Fig. 7 zeigt einen Gliederschlauch, der aus einzelnen Gliedern 35, 36 mit abwechselnd ent-

7

gegengesetzter U-förmiger Profilierung zusammengesetzt ist. Hier sind auch die Verschlußglieder 37, 38 mit U-förmigem Querschnitt ausgebildet und an den Schlauchgliedern durch Schweißungen 39 befestigt.

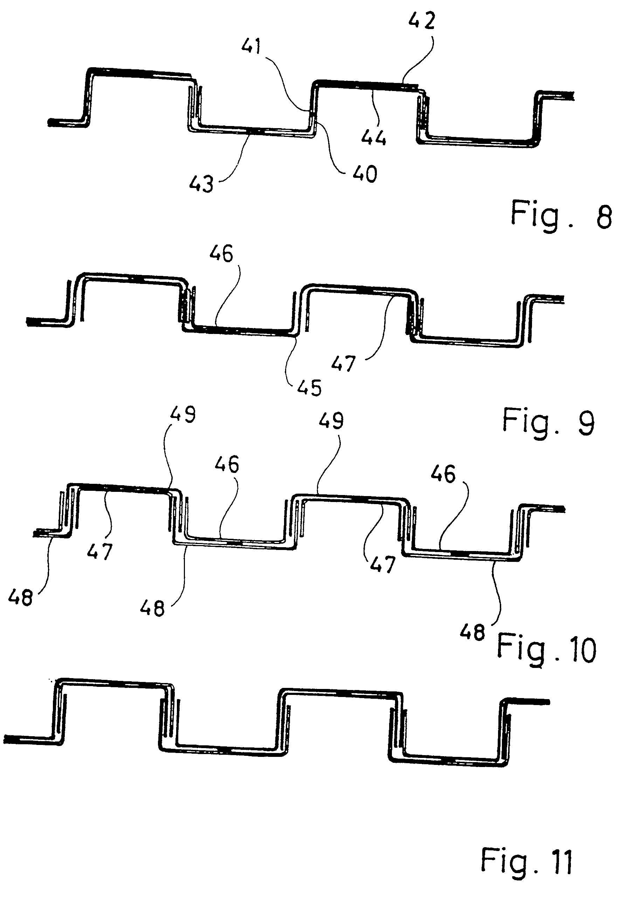

Fig. 8 zeigt Schlauchglieder 40 mit S-förmiger Profilierung. Die Verschlußglieder 41 haben im nach außerhalb des Schlauches offenen Profilteil des Schlauchgliedes 40 einen U-förmigen radialen Querschnitt. Hieran schließt sich auf einer Seite ein Fortsatz 42 an, der den nach innerhalb des Schlauches offenen Profilteil des Schlauchgliedes 40 außen übergreift. U-förmige Profilierung und Fortsatz des Verschlußgliedes 41 sind mit dem Schlauchglied 40 bei 43 und 44 verschweißt. Hier sind also praktisch zwei Verschlußglieder zu einem Bauteil vereinigt.

Gemäß Fig. 9 ist bei Schlauchgliedern 45 mit S-förmiger Profilierung vorgesehen, daß von außen und von innen in die Profilierung Verschlußglieder 46, 47 mit U-förmiger Profilierung eingesetzt sind. Durch die damit erreichte größere Zahl von radialen Stegen ist ein besonders quersteifer Gliederschlauch geschaffen.

Fig. 10 zeigt die gleiche Konstruktion wie Fig. 9 nur mit dem Unterschied, daß hier der Gliederschlauch aus ringförmigen Gliedern 48, 49 mit U-förmiger Profilierung besteht.

An diesem Beispiel läßt sich auch einfach erläutern, daß es ausreicht, wenn nur jedes zweite der Verschlußglieder gleichzeitig auch die Sperrwirkung in Längsrichtung des Schlauches ausübt. Denn wenn beispielsweise die Verschlußglieder 46 in der dargestellten Weise ausgebildet sind, können die Verschlußglieder 47 wesentlich schmalere, nur noch die Verschlußfunktion für die Glieder 49 ausübende Laschen sein, ohne daß dadurch benachbarten Gliedern 48, 49 eine Verschiebebewegung in Längsrichtung des Schlauches möglich wäre.

Bei einem Schlauchaufbau gemäß Fig. 10 besteht aber auch die Möglichkeit, die inneren Ringe 48 als in sich geschlossene, also ungeteilte Ringe auszubilden, so daß dann die Verschlußglieder 46 in Fortfall kommen können und nur noch die Verschlußglieder 47 zur Ausübung sowohl der Verschlußfunktion als auch der Sperrwirkung erforderlich sind.

Fig. 11 zeigt die Kombination eines Gliederschlauches gemäß Fig. 10 mit Verschlußgliedern gemäß Fig. 8.

Fig. 12 zeigt im axialen Schnitt ein Schlauchglied 50 mit einem Verschlußglied 51. Aus dem Verschlußglied 51 sind Nasen 52 ausgestanzt und durch Umbiegen durch Öffnungen 53 des Schlauchgliedes 50 geführt, um dieses im Bereich der Teilungsstelle zusammenzuhalten.

Eine Variante hierzu zeigt Fig. 13 bei einem Schlauchglied 54 und einem Verschlußglied 55 mit U-förmiger Profilierung. Hier ist aus den U-Schenkeln eine Nase 56 ausgestanzt und durch Biegen durch eine Öffnung 57 des benachbarten Radialsteges des Gliedes 54 geführt.

Eine weitere Variante zeigt Fig. 14, in der ausschnittweise ein Schlauchglied 58 und ein

8

Verschlußglied 59 ersichtlich ist. Die beiden Teile sind bei 60 durch Prägen formschlüssig miteinander verbunden.

In mit Fig. 14 vergleichbarer Weise ist in Fig. 15 eine Schraubverbindung zwischen Schlauchglied 61 und Verschlußglied 62 ersichtlich.

Schließlich zeigt Fig. 16 in teilweiser Schnittansicht einen Schlauch aus im Schnitt S-förmigen Gliedern 63, die in Stauchlage des Schlauches durch Verschlußglieder 64 miteinander verbunden sind, im vorliegenden Falle beispielsweise durch Mieten 65. Entsprechend liegt die Schlauchachse 66 bei der dargestellten Position, so daß die Verschlußglieder auf der Innenseite einer gedachten Schlauchkrümmung angeordnet sind.

## Patentansprüche

1. Flexibler Schlauch mit rechteckigem Querschnitt, insbesondere Energieleitungsträger für die Anordnung zwischen einem beweglichen Verbraucher und einem ortsfesten Anschluß, bestehend aus geteilten, ringförmigen Gliedern (2, 11, 15, 21, 25, 35, 36, 40, 45, 48, 49, 50, 54, 58, 61, 63) mit im radialen Querschnit S-förmiger oder U-förmiger Profilierung, wobei sich benachbarte Glieder mit ihren randständigen, radialen Stegen (3, 4) hintergreifen, an jeder Teilungsstelle durch Verschlußmittel zusammengefügt sind und der Schlauch aus der geraden Lage nur in eine zu einer der Rechteckseiten des Schlauchquerschnittes senkrechten richtung abbiegbar ist, *dadurch gekennzeichnet*, daß die aus einem Profil band hergestellten Glieder (2, 11, 15, 21, 25, 35, 36, 40, 45, 48, 49, 50, 54, 58 61, 63) eine Teilungsstelle (5) auf der Krümmungsaußen oder Innenseite des Schlauches aufweisen, daß die die Teilungsstelle enthaltenden Abschnitte der Glieder durch ein Verschlußglied (6, 7, 12, 13, 16, 17, 20, 23, 27, 37, 38, 41, 46, 47, 51, 55, 59, 62, 64) miteinander verbunden sind und daß wenigstens jedes zweite Verschlußglied bei gestrecktem oder gestauchtem Schlauchzustand eine die gegeneitige Bewegung zwischen seinem zugeordneten Gliedabschnitt und den entsprechenden Abschnitten der diesem in Längsrichtung des Schlauches benachbarten Glieder durch axiale Bewegungsblockierung deren radialer Stege (3, 4) sperrende Breite aufweist.

2. Schlauch nach Anspruch 1 *dadurch gekennzeichnet*, daß die Verbindung zwischen den die Teilungsstellen enthaltenden Abschnitten der Schlauchglieder und den Verschlußgliedern formschlüssig bzw. stoffschlüssig durch Schweißen, Löten, Kleben, Ausspritzen bzw. Ausschäumen, Schrauben, Nieten, Prägen gegenseitigen Eingriff od. dgl. gebildet ist.

3. Schlauch nach einem der vorhergehenden Ansprüche, *dadurch gekennzeichnet*, daß die Verschlußglieder (7, 13, 17, 20, 64) Laschen sind.

4. Schlauch nach einem der Ansprüche 1 oder 2, *dadurch gekennzeichnet,* daß die Verschlußglieder (6, 12, 16, 23, 27, 37, 38, 46, 47, 51, 55) eine im Radialschnitt U-förmige Profilierung aufweisen.

5. Schlauch nach Anspruch 3 oder 4, *dadurch gekennzeichnet,* daß die Verschlußglieder die Profilierung in Radialrichtung ausfüllen.

6. Schlauch nach Anspruch 1 oder 2, *dadurch gekennzeichnet,* daß ausgehend vom gestreckten Schlauchzustand die Verschlußglieder (41) beginnend bei einer in den nach außerhalb des Schlauches offenen Profilteilen angeordneten, im Radialschnitt U-förmigen Profilierung die nach innerhalb des Schlauches offenen Profilteile radial außen durch einen mit der U-förmigen Profilierung verbundenen Fortsatz (42) axial übergreifen.

7. Schlauch nach einem der vorhergehenden Ansprüche, *dadurch gekennzeichnet,* daß sich die Verschlußglieder über im wesentlichen die gesamte die Teilungsstelle (5) aufweisende Rechteckseite des Schlauches erstrecken.

8. Schlauch nach einem der vorhergehenden Ansprüche, *dadurch gekennzeichnet,* daß einzelnen Verschlußglieder (12) radial gegenüberliegend zusätzliche Sperrglieder (14) am Schlauchglied befestigt sind.

9. Schlauch nach einem der Ansprüche 1 bis 7, *dadurch gekennzeichnet,* daß einzelne der Verschlußglieder als um den gesamten Schlauch umlaufend ausgebildet sind.

10. Schlauch nach Anspruch 1, *dadurch gekennzeichnet,* daß bei Schlauchgliedern (35, 36, 48, 49) mit U-förmiger Profilierung die radial innerhalb angeordneten Glieder (36, 48) mit nach außerhalb des Schlauches offener Profilierung als in sich geschlossene Glieder ausgebildet sind.

11. Schlauch nach einem der Ansprüche 1 bis 5 und 7 bis 10, *dadurch gekennzeichnet,* daß ausgehend vom gestauchten Schlauchzustand die Verschlußglieder (64) wenigstens mit dem radial außen liegenden Schlauchglied (63) verbunden sind.

**Claims**

1. Flexible hose of rectangular cross-section, especially a power line carrier for arrangement between a movable consumer and a fixed connection, consisting of split annular members (2, 11, 15, 21, 25, 35, 36, 40, 45, 48, 49, 50, 54, 58, 61, 63) of S-shaped or U-shaped profile in radial cross-section, wherein adjacent members engage one behind another by means of the radial webs (3, 4) at their edges and are joined at each split by closure means, and the hose can be bent out of the straight position only in one direction perpendicular to one of the rectangular sides of the hose cross-section, *characterised in that* the members (2, 11, 15, 21, 25, 35, 36, 40, 45, 48, 49, 50, 54, 58, 61, 63), which are made from a profiled strip, have a split (5) on the outer or inner side of the curve of the hose, the portions of the members containing the split are joined to one another by a closure member (6, 7, 12, 13, 16, 17, 20, 23, 27, 37, 38, 41, 46, 47, 51, 55, 59, 62, 64), and with the hose in the extended or compressed state at least every second closure member is of a width that prevents relative movement between its associated member portion and the corresponding portions of the members that are adjacent thereto in the longitudinal direction of the hose by blocking the axial movement of the radial webs (3, 4) thereof.

2. Hose according to claim 1, *characterised in that* the connection between the port ions of the hose members containing the splits and the closure members is formed by positive-locking or bonding by means of welding, soldering, gluing, packing with injected or foamed material, screwing, riveting, stamping, mutual engagement or the like.

3. Hose according to any one of the preceding claims, *characterised in that* the closure members (7, 13, 17, 20, 64) are strips.

4. Hose according to claim 1 or 2, *characterised in that* the closure members (6, 12, 16, 23, 27, 37, 38, 46, 47, 51, 55) have a U-shaped profile in radial section.

5. Hose according to claim 3 or 4, characterised in that the closure members fill up the profile in the radial direction.

6. Hose according to claim 1 or 2, *characterised in that* with the hose in the extended state, the closure members (41), beginning with a profile of U-shaped radial section which is arranged in the profile parts that are open towards the outside of the hose, overlap axially on the radially outer side the profile parts that are open towards the inside of the hose by means of an extension piece (42) that is connected to the U-shaped profile.

7. Hose according to any one of the preceding claims, *characterised in that* the closure members extend over substantially the whole of the rectangular side of the hose having the split (5).

8. Hose according to any one of the preceding claims, *characterised in that* radially opposite some of the closure members (12), additional blocking members (14) are attached to the hose member.

9. Hose according to any one of claims 1 to 7, *characterised in that* some of the closure members are constructed to extend around the circumference of the entire hose.

10. Hose according to claim 1, *characterised in that* in the case of hose members (35, 36, 48, 49) having a U-shaped profile the radially inner members (3, 6, 48) having a profile that is open towards the outside of the hose are constructed as undivided members.

11. Hose according to any one of claims 1 to 5 and 7 to 10, *characterised in that* with the hose in the compressed state, the closure members (64) are connected at least to the radially outer hose member (63).

**Revendications**

1. Tuyau flexible de section carrée, particulièrement support pour le transport d'énergie pour arrangement entre un utilisateur mobile et un raccordement fixe, composé d'éléments séparés, annulaires (2, 11, 15, 21, 25, 35, 36, 40, 45, 48, 49, 50, 54, 58, 61, 63) ayant un profilage de section radiale en forme d'S ou d'U, les éléments contigus s'accrochant par leurs nervures radiales (3,4) à bord continu, étant joints sur chaque point de séparation par des moyens de raccord, et le tuyau flexible n'étant pliable que dans un sens perpendiculaire à l'une des faces rectangulaires de la section du tuyau flexible, *caractérisé par* le fait que les éléments (2, 11, 15, 21, 25, 35, 36, 40, 45, 48, 49, 50, 54, 58, 61, 63) fabriqués en ruban profilé, présentent un point de séparation (5) sur la face intérieure ou sur la face extérieure de la courbure du tuyau flexible, que les sections des éléments qui contiennent les points de séparation sont reliées entre elles par un élément de raccord (6, 7, 12, 13, 16, 17, 20, 23, 27, 37, 38, 41, 46, 47, 51, 55, 59, 62, 64) et qu'au moins un élément de raccord sur deux, le tuyau flexible étant en extension ou en compression, présente une largeur interdisant le déplacement réciproque entre sa section d'élément qui lui est affecté et les sections correspondantes des éléments qui lui sont voisins dans le sens longitudinal du tuyau flexible, par blocage axial du mouvement des nervures radiales (3, 4) de ces éléments.

2. Tuyau flexible selon la revendication 1, *caractérisé par* le fait que la liaison entre les sections des éléments de tuyau flexible contenant les points de séparation et les éléments de raccord est formée par complémentarité de forme ou par apport de matière, en procédé de soudage, brasage, collage, pulvérisation, moussage, vissage, rivetage, matriçage d'un engrènement réciproque ou similaire.

3. Tuyau flexible selon l'une des revendications précédentes *caractérisé par* le fait que les éléments de raccord (7, 13, 17, 20, 64) sont des éclisses.

4. Tuyau flexible selon la revendication 1 ou 2, *caractérisé par* le fait que les éléments de raccord (6, 12, 16, 23, 27, 37, 38, 46, 47, 51, 55) présentent un profilage dont la section radiale est en forme d'U.

5. Tuyau flexible selon la revendication 3 ou 4, *caractérisé par* le fait que les éléments de raccord comblent le profilage dans le sens radial.

6. Tuyau flexible selon revendication 1 ou 2, *caractérisé par* le fait que, partant du tuyau flexible en état d extension, les éléments de raccord (41), commençant par un profilage de section radiale en forme d'U disposé dans les parties profilées du tuyau flexible ouvertes vers l'extérieur, empiètent axialement sur les parties profilées du tuyau flexible ouvertes vers l'intérieur, radialement vers l'extérieur, par un prolongement (42) relié au profilage en forme d'U.

7. Tuyau flexible selon l'une des revendications précédentes, *caractérisé par* le fait que les éléments de raccord s'étendent sensiblement sur toute la face rectangulaire du tuyau flexible qui présente les points de séparation (5).

8. Tuyau flexible selon l'une des revendications précédentes, *caractérisé par* le fait que des éléments d'arrêt (14) radialement opposés aux différents éléments de raccord (12) sont fixés sur l'élément du tuyau flexible.

9. Tuyau flexible selon l'une des revendications 1 à 7, *caractérisé par* le fait que quelques-uns des éléments de raccord sont conformés comme entourant tout le tuyau flexible.

10. Tuyau flexible selon la revendication 1, *caractérisé par* le fait que, s'agissant des éléments de tuyau flexible (35, 36, 48, 49) à profilage en forme d'U, les éléments (36, 48) disposés radialement à l'intérieur sont conformés en éléments fermés en soi avec un profilage ouvert vers l'extérieur du tuyau flexible.

11. Tuyau flexible selon l'une des revendications 1 à 5 et 7 à 10, *caractérisé par* le fait que, en partant du tuyau flexible en état de compression, les éléments de raccord (64) sont reliés avec au moins l' élément de tuyau flexible (63) se trouvant radialement à l'extérieur.

Fig. 1

Fig. 2

EP 0 184 678 B1

Fig. 3

Fig. 4

Fig. 5

EP 0 184 678 B1

28  30          27  31      29      26

25

Fig. 6

7

EP 0 184 678 B1

35                          35

37      39

36                          38

Fig. 7

41  42

43  44  40

Fig. 8

46

47  45

Fig. 9

49  49

46  46

47  48  47

48  48

Fig. 10

Fig. 11

Fig.12

Fig. 13

Fig. 14

Fig.15

Fig. 16